(19) Europäisches Patentamt
European Patent Office
Office européen des brevets

(11) Veröffentlichungsnummer: **0 019 173**
**B1**

(12) # EUROPÄISCHE PATENTSCHRIFT

(45) Veröffentlichungstag der Patentschrift: **23.01.85**

(51) Int. Cl.⁴: **C 11 D 1/722**, B 01 D 19/04

(21) Anmeldenummer: **80102419.1**

(22) Anmeldetag: **05.05.80**

(54) **Verwendung von alkoxylierten Alkoholen als biologisch abbaubare, schaumarme Tenside in Maschinengeschirrspülmitteln.**

(30) Priorität: **10.05.79 DE 2918826**

(43) Veröffentlichungstag der Anmeldung: **26.11.80 Patentblatt 80/24**

(45) Bekanntmachung des Hinweises auf die Patenterteilung: **23.01.85 Patentblatt 85/4**

(84) Benannte Vertragsstaaten: **BE CH DE FR GB IT LI SE**

(56) Entgegenhaltungen:
**DE-A-2 724 349**
**DE-A-2 810 703**
**FR-A-1 508 818**
**FR-A-2 247 532**
**FR-A-2 366 356**
**US-A-2 677 700**

(73) Patentinhaber: **BASF Aktiengesellschaft, Carl-Bosch-Strasse 38, D-6700 Ludwigshafen (DE)**

(72) Erfinder: **Stoeckigt, Dieter, Koenigstrasse 4, D-6700 Ludwigshafen (DE)**
Erfinder: **Kiessling, Dieter, Dr., Osloer Weg 46, D-6700 Ludwigshafen (DE)**
Erfinder: **Perner, Johannes, Dr., Kiesstrasse 19b, D-6730 Neustadt 1 (DE)**
Erfinder: **Trieselt, Wolfgang, Dr., Alwin-Mittasch-Platzl, D-6700 Ludwigshafen (DE)**
Erfinder: **Trapp, Horst, Dr., Johann-Sebastian-Bach-Strasse 10a, D-6831 Plankstadt (DE)**

**EP 0 019 173 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft die Verwendung spezieller niedrig alkoxylierter Alkohole in Geschirrspülmittel für Geschirrspülmaschinen, die sich durch Schaumarmut und besonders gute biologische Abbaubarkeit auszeichnen.

Spezialmittel, die für automatische Geschirrspülmaschinen Verwendung finden, lassen sich im allgemeinen aus anorganischen Salzen, wie Natriumtripolyphosphat, alkalischen Buildern, wie Natriummetasilikat, chlorierten anorganischen Verbindungen, wie chloriertem Trinatriumphosphat, gegebenenfalls chlorierenden organischen Verbindungen wie Dichlorisocyanuraten und oberflächenaktiven Verbindungen (Tensiden), wie alkoxylierten Alkoholen oder Alkylphenolen formulieren. In diesen Kompositionen fungieren die letztgenannten oberflächenaktiven Substanzen im allgemeinen als Netzmittel, Schaumdämpfer und zusätzliche reinigende Komponente. Zusätzlich zu den letztgenannten Eigenschaften, die derartige Mittel aufweisen müssen, besteht ein weiteres Erfordernis für oberflächenaktive Substanzen darin, daß sie biologisch abbaubar sein sollen.

Bei oberflächenaktiven Agentien, die in automatischen Geschirrspülmaschinen brauchbare Ergebnisse erbringen sollen, ist es erforderlich, daß diese Mittel gleichermaßen bei höheren und niedrigeren Temperaturen in möglichst gleicher Stärke wirksam sind, möglichst geringen Schaum entwickeln und im übrigen gleichzeitig das zu reinigende Geschirr derart benetzen, daß während der Abkühlung das Wasser von dem Geschirr leicht abperlt (daß das Geschirr von selbst trocknet).

Bisher ist es mit keinem der gängigen, biologisch abbaubaren oberflächenaktiven Substanzen vollständig gelungen, eine optimale schaumdämpfende Wirkung zu erzielen.

Maschinengeschirrspülmittel müssen in ihrer Reinigungskraft und in ihrer Löslichkeit derart beschaffen sein, daß sich auf den Gegenständen keine trüben Schleier oder Rückstände bilden. Schließlich sollen möglichst geringe Mengen ausreichend sein, um eine optimale Wirkung zu entfalten, und auch sowohl bei hohen als auch bei niederen Temperaturen gleichermaßen wirksam bleiben.

Die vom Verbraucher zu verwendenden flüssigen Tensidformulierungen (Klarspüler) sollen deshalb, damit sie auch bei Heißspülgängen gut wirksam sind, einen ausreichend hohen Klarpunkt (ca. 45 bis 70° C) aufweisen, was aber bisher zumeist die Schaumeigenschaften verschlechterte.

Aus der Patentliteratur ist eine Reihe von oberflächenaktiven Substanzen als Wasch- und Reinigungsmittelzusätze auf der Basis Ethylenoxid-Propylenoxid bekannt. Allen diesen Mitteln war es jedoch bisher gemeinsam, daß sie zwar die eine oder andere der geforderten Eigenschaften aufwiesen, jedoch nicht alle Kriterien in ihrer Gesamtheit gleichermaßen befriedigend erfüllten.

Aus der DE-OS 2 140 010 sind Alkoxylierungsprodukte bekannt, die man durch Ethoxylierung und anschließende Propoxylierung von längerkettigen Fettalkoholen erhält. Mit diesen Produkten ist eine teilweise Lösung der obenerwähnten Probleme zwar möglich, doch lassen gleichzeitige Schaumarmut und biologische Abbaubarkeit noch zu wünschen übrig.

Aus Schönfeldt, »Grenzflächenaktive Ethylenoxid-Addukte«, Wiss. Verlagsgesellschaft mbH, Stuttgart, 1976, Seite 55, ist die Propoxylierung und anschließende Ethoxylierung von Laurylalkohol bekannt, und es werden in der genannten Stelle bestimmte Eigenschaften genannt, die sich in Abhängigkeit von der angelagerten Menge an Propylenoxid ändern sollen. Genaue zahlenmäßige Angaben sind jedoch aus dieser Literaturstelle nicht ersichtlich.

In der GB-PS 1 097 491 werden einwertige aliphatische, z. B. $C_8$- bis $C_{10}$-Alkohole beschrieben, die meist mit 4 bis 12 Mol Propylenoxid und anschließend mit 6 bis 16 Mol Ethylenoxid alkoxyliert worden sind. Diese Mittel sollen z. B. in Wollwaschmittel Verwendung finden. Sie sind zwar biologisch abbaubar, können aber hinsichtlich ihrer Schaumarmut nicht befriedigen.

Aus der DE-OS 1 645 011 sind schließlich alkoxylierte Fettalkohole bekannt, die man gemäß einer bevorzugten Ausführungsform durch Propoxylierung und anschließende Alkoxylierung mit einer Mischung aus Ethylenoxid und Propylenoxid erhält. Diese Produkte schäumen ebenfalls noch zu stark.

Dasselbe gilt für die in der FR-A-2 247 532 beschriebenen $C_6$- bis $C_{10}$-alkoxylierten Alkohole, die zwar biologisch abbaubar sind, jedoch als typische Netzmittel noch zu stark schäumen.

In der FR-A-1 508 818 werden Ethylenoxid/Propylenoxid-Mischalkoxylate von $C_{10}$- bis $C_{18}$-Alkoholen beschrieben, die, um schaumarm zu sein, soviel Propylenoxid enthalten, daß sie nach den gesetzlichen Bestimmungen nicht genügend biologisch abbaubar sind.

Schließlich kennt man aus der DE-A-2 724 349 höhere Alkohole, die zuerst propoxyliert und dann ethoxyliert worden sind, als Tensidkomponenten in Textilwaschmitteln, die deshalb zugesetzt werden, weil bei ihrer Herstellung Schwierigkeiten vermieden werden, die sich beim Heißsprühtrocknen der Formulierungen (Absetzen fettartiger Massen etc.) ergeben. Bezüglich schaumdämpfender Wirkung oder besonders günstiger biologischer Abbaubarkeit dieser Tenside ist aber aus dieser Publikation nichts zu entnehmen.

Das Ziel der Erfindung bestand in der Auffindung solcher nichtionischer Substanzen, die

1. schaumarm und
2. biologisch optimal abbaubar sind

sowie bei ihrer Verwendung in Geschirrspülmaschinen eine gute Reinigungswirkung und eine gute

Klarspülung bewirken.

Dieses Ziel wird mit der Verwendung von alkoxylierten Alkoholen der Formel

$$RO\left(-CH_2-\underset{\underset{\displaystyle CH_3}{|}}{CH}-O-\right)_x\left(CH_2-CH_2O\right)_y-H$$

in der R einen $C_{11}$- bis $C_{18}$-Alkylrest oder den Alkylrest eines $C_9/C_{11}$- oder $C_{13}/C_{15}$-Oxoalkohols, x 2 bis 4,5 und y 2 bis 5 bedeuten, als schaumarme und biologisch abbaubare Tensidzusätze in Geschirrspülmittel für Geschirrspülmaschinen, erreicht.

Es handelt sich somit um Fettalkohole oder Alkoholgemische, die zuerst mit 2 bis 4,5 Mol 1,2-Propylenoxid und anschließend mit 2 bis 5 Mol Ethylenoxid alkoxyliert worden sind. Sie enthalten also höchstens 9,5 Alkylenoxidgruppen im Molekül. Die Tatsache, daß trotz dieses geringen Alkoxylierungsgrades und trotz der relativ schlechten Löslichkeit der Produkte in Wasser ein optimaler Reinigungs- und Klarspüleffekt erreicht werden kann, mußte überraschen, nachdem man gemäß dem Stand der Technik (DE-OS 2 140 010 und GB-PS 1 097 491) wesentlich mehr Alkylenoxid-Einheiten pro Mol für erforderlich gehalten hatte.

Auch die gute biologische Abbaubarkeit war nicht ohne weiteres vorhersehbar, da allgemein bekannt ist, daß Propylenoxid-Addukte relativ schlecht abbaubar sind.

Ausgangsverbindungen zur Herstellung der Addukte sind aliphatische Alkohole mit 11 bis 18 C-Atomen oder $C_9/C_{11}$- und $C_{13}/C_{15}$-Oxoalkohole.

Alkohole, die in Betracht kommen, sind beispielsweise Undecylalkohol, Laurylalkohol, Tridecylalkohol, Tetradecylalkohol, Pentadecylalkohol, Cetylalkohol, Heptadecylalkohol, Stearylalkohol, hydrierter Talgfettalkohol und deren Gemische. Möglich sind auch Gemische dieser Alkohole, wie sie technisch bei der Alkoholsynthese, z. B. nach Ziegler, aus Aluminiumalkylen anfallen. Derartige Alkohole sind z. B. die $C_{12}$- bis $C_{14}$-, $C_{14}$- bis $C_{16}$- und $C_{16}$- bis $C_{18}$-Alkanolschnitte. Besonders wichtig sind die Alkohole oder Alkoholgemische, die nach der Oxosynthese hergestellt worden sind, und zwar die $C_9/C_{11}$- und $C_{13}/C_{15}$-Oxoalkohole. Die Produkte lassen sich durchaus mit einzelnen definierten Alkoholen herstellen und im erfindungsgemäßen Sinne den Mitteln zusetzen. Es ist jedoch vom Standpunkt der Rentabilität zweckmäßig, die wohlfeileren Gemische heranzuziehen, da dadurch eine zeitraubende und kostspielige Trennung der einzelnen Verbindungen vermieden werden kann.

Diese Alkohole bzw. Alkoholgemische werden anschließend mit der definitionsgemäßen Menge Propylenoxid und anschließend Ethylenoxid nach an sich bekannten Methoden umgesetzt, die keiner speziellen Erläuterung mehr bedürfen — es sei in diesem Zusammenhang beispielsweise auf die obenerwähnte Monographie von Schönfeldt verwiesen.

Eine feste Geschirrspülmittelzubereitung, für welche die erfindungsgemäß zu verwendenden Addukte in Betracht kommen, enthält die bekannten Zusatzstoffe, z. B. Gerüststoffsubstanzen (Builder), Bleichmittel und eventuell Duftstoffe und Trübungsmittel. Als Builder kommen neben den immer noch am häufigsten verwendeten Phosphaten Phosphatsubstitute, wie Polyacrylsäure, Polymaleinsäure, Maleinsäure-Vinylether-Copolymerisate, Nitrilotriessigsäure oder anorganische Substanzen, wie Zeolithe, in Betracht.

Bei manchen Geschirrspülmitteln sind bis zu 99,5 Gew.-% an Buildern und alkalisch reagierenden Stoffen, wie Soda, anwesend. Die Menge an erfindungsgemäß zu verwendendem Tensid liegt bei 0,5 bis 5 Gew.-%.

Diese Zubereitungen zeichnen sich, wenn sie die Addukte enthalten, durch hohe Schaumarmut, sehr gute biologische Abbaubarkeit sowie eine gute Reinigungskraft und einen erhöhten Klarspüleffekt aus.

Die nun folgenden Beispiele erläutern die Erfindung.

## Beispiele

Folgende Produkte wurden geprüft:

1) $C_{13}/C_{15}$-Oxoalkohol × 4 PO + 2,26 EO (Blockcopolymerisat)
2) $C_{13}/C_{15}$-Oxoalkohol × 4 PO + 4 EO (Blockcopolymerisat)
3) $C_9/C_{11}$-Oxoalkohole × 3,9 PO + 2,1 EO (Blockcopolymerisat)

Weiter wurden vergleichsweise getestet:

4) Talgfettalkohol × 4 EO + 7 PO (Blockcopolymerisat) gemäß DE-OS 2 140 010)
5) $C_9/C_{11}$-Oxoalkohol × 6 EO/7 PO (Mischpolymerisat) gemäß FR-A-1 508 818
6) $C_9/C_{11}$-Oxoalkohol × 2 PO (3 EO/2 PO)
(PO-Block + EO/PO-Mischblock gemäß DE-OS 1 645 011)

7) $C_6/C_{10}$-Ziegler-Alkohol + 3,4 PO + 4,0 EO
8) $C_6/C_{10}$-Ziegler-Alkohol + 3,4 PO + 4,2 EO
9) n-Decylalkohol + 3,4 PO + 4,2 EO

} nach FR-A 2 247 532

PO = Propylenoxid
EO = Ethylenoxid

Die Produkte wurden auf folgende Weise in einer automatischen Geschirrspülmaschine (Miele G 19) geprüft:

Aus Natriumtripolyphosphat, Natriumtetrapolyphosphat, Natriummetasilikat, Natriumcarbonat und gegebenenfalls Kaliumdichlorisocyanurat und nichtionischen Kondensationsprodukten wurden mehrere Spülmittelformulierungen hergestellt.

Hierbei wurden übliche und erfindungsgemäß zu verwendende Produkte als Tenside eingesetzt.

Der Prozentsatz an nichtionischen Tensiden betrug 1 Prozent bei Prüfung der Reinigungswirkung sowie 5 Prozent bei Prüfung des Schaumverhaltens mit Eiweißbelastung (»Eitest«).

### Prüfung der Schaumwirkung (Eitest)

Durch magnetische Induktionsmessung wurde in einem Geschirrspülautomaten (Miele G 19) mit Hilfe eines Zählwerks die Zahl der Umdrehungen eines Spülarms bestimmt. Durch Schaumbildung, die besonders bei Anwesenheit von Tensiden und Proteinen auftritt, wird die Umdrehungszahl des Spülarms vermindert. Eine niedere Umdrehungszahl bedeutet hoher Schaum, d. h. mangelnde Rückstoßkraft des Spülarms.

Die Testzeit betrug 12 Minuten, wobei nach bestimmten Zeiten die Umdrehungszahlen pro Minute aus der Gesamtumdrehungszahl berechnet wurden. Der Waschvorgang beginnt bei Raumtemperatur und nach etwa 10 Minuten betrug die Temperatur des Wassers 60° C.

### Prüfung der Reinigungswirkung

20 Teller wurden unter Praxisbedingungen in 3 Durchgängen, wobei jedesmal neu angeschmutzt wurde, mit einer Spülmittelformulierung aus 45 Teilen Natriumcarbonat, 1,5 Teilen Kaliumdichlorisocyanurat und 1 Teil Tensid gewaschen.

Angeschmutzt wurden die Teller, indem man eine Kartoffelmehlwassermischung austrocknen ließ. Nach jedem Durchgang wurden 3 Teller herausgenommen und mit Jodstärkeindikator auf die Zunahme des Stärkeschichtaufbaus geprüft. Diese Teller wurden durch 3 neue frisch beschichtete Teller ersetzt. Die Stärkebelastung war somit bei jedem Waschgang gleich. Beurteilt wurde nach den auf den Tellern verbliebenen Stärkerückständen nach den 3 Durchgängen. Zusätzlich wurde noch auf Streifenbildung geprüft, indem man der Waschlauge Tiefkühlspinat zusetzte.

In allen Fällen wurde eine ausgezeichnete Reinigungswirkung erzielt, die auch unter Eiweißbelastung erhalten blieb.

### Prüfung des Klarspüleffekts

Der Klarspüler setzte sich zusammen aus — bezogen auf das Gewicht — 20% eines Tensids der obengenannten Zusammensetzung, 10% Cumolsulfonat (Na-Salz), 6% einer Mischung aus 30% Bernsteinsäure, 45% Glutarsäure und 25% Adipinsäure in Wasser. Die Klarspülerflotte enthält 0,3 bis 0,5 ml Klarspüler pro Liter.

Nach einem Spülgang in der automatischen Geschirrspülmaschine wurden Ablauf, Schleier, Streifen und Flecken visuell beurteilt, wobei Benotungen zwischen 1 (sehr schlecht) und 5 (sehr gut) vorgenommen wurden.

Der Klarpunkt wird bestimmt durch Erwärmen des Klarspülers im Wasserbad bis zu der Temperatur, bei der eine Trübung des transparenten Klarspülers eintritt.

In der nun folgenden Tabelle 1 sind die Ergebnisse zusammengestellt.

Tabelle 1

| Tensid | Reinigungswirkung Reststärke % | Klarspüleffekt Ablauf | Schleier | Streifen | Flecken | Klarpunkt °C | Schaum-(Eitest) UpM |
|---|---|---|---|---|---|---|---|
| 1 | 23 | 3 | 4,5 | 4,5 | 3 | 44 | 118 |
| 2 | 25 | 2 | 3,5 | 4,5 | 2,5 | 48 | 103 |
| 3 | 23 | 3 | 4,5 | 4,5 | 3 | 50 | 110 |
| 4 | 24 | 2,5 | 3 | 4 | 2,5 | 31 | 116 |
| 5 | 33 | 2,5 | 3 | 4,5 | 2,5 | 69 | 82 |
| 6 | 30 | 2,5 | 3 | 4,5 | 2,5 | 66 | 88 |
| 7 | 25 | | | nicht bestimmt | | | 71 |
| 8 | 26 | | | nicht bestimmt | | | 64 |
| 9 | 30 | | | nicht bestimmt | | | 96 |

Die Ergebnisse zeigen, daß die erfindungsgemäß zu verwendenden Tenside hinsichtlich ihrer Reinigungswirkung gegenüber den Produkten gemäß dem Stand der Technik (Beispiele 4 bis 9) zumindest gleichwertig, gegenüber Beispielen 5, 6 und 9 überlegen sind. Ähnliches gilt für den Klarspüleffekt. Die Schaumwerte sind bedeutend besser gegenüber den Produkten 5 bis 8.

Produkt 4, das vergleichbar sehr gute Schaumeigenschaften zeigt, weist aber einen wesentlich niedrigeren Klarpunkt auf, was andere Nachteile mit sich bringt — der Klarspüleffekt ergibt in diesem Fall eine stärkere Schleier- und Streifenbildung.

Überraschend ist auf jeden Fall die ausgezeichnete Schaumarmut trotz der hohen Klarpunkte gegenüber den Produkten 5 und 6, die zwar hohe Klarpunkte besitzen, jedoch absolut unbefriedigende Schaumergebnisse erbringen. Die Produkte 7 und 8 zeigen eine völlig unbefriedigende Schaumdämpfung. Produkt 9 scheidet wegen geringer Reinigungswirkung aus, hinsichtlich Schaum ist es ein Grenzfall.

## Prüfung der biologischen Abbaubarkeit

Die Prüfung erfolgte mit dem OECD-Bestätigungstest gemäß »Verordnung über die Abbaubarkeit von anionischen und nichtionischen grenzflächenaktiven Stoffen in Wasch- und Reinigungsmitteln«, veröffentlicht im Bundesgesetzblatt 1977, Teil I, Seiten 244 ff., am 30. 01. 1977.

Danach dürfen in der BRD nur solche Tenside zugelassen werden, die mindestens zu 80 Gew.-% biologisch abbaubar sind.

Die Ergebnisse sind aus der folgenden Tabelle 2 ersichtlich:

Tabelle 2

| Geprüfte Substanz | | Biologische Abbaubarkeit in Gew.-% |
|---|---|---|
| $C_{13}/C_{15}$-Oxoalkohol | + 4 PO + 2 EO | 94 |
| $C_{13}/C_{15}$-Oxoalkohol | + 4 PO + 4 EO | 87 |
| $C_{13}/C_{15}$-Oxoalkohol | + 4,5 PO + 5,5 EO | 78 (Vergleich) |
| $C_{13}/C_{15}$-Oxoalkohol | + 7 PO + 7 EO | 60 (Vergleich) |
| $C_9/C_{11}$-Oxoalkohol | + 4 PO + 2 EO | 88 |
| $C_9/C_{11}$-Oxoalkohol | + 4 PO + 4 EO | 91 |
| $C_9/C_{11}$-Oxoalkohol | + 7 PO + 4 EO | 71 (Vergleich) |

Die Werte zeigen, daß bereits eine geringe Überschreitung des erfindungsgemäß definierten EO- bzw. PO-Gehalts die biologische Abbaubarkeit unterhalb des gesetzlichen Limits absenkt.

**Patentanspruch**

Verwendung von alkoxylierten Alkoholen der Formel

$$RO\left(CH_2-\underset{\displaystyle CH_3}{CH}-O\right)_x(CH_2-CH_2O)_y-H$$

in der R für einen $C_{11}$- bis $C_{18}$-Alkylrest oder für den Alkylrest eines $C_9/C_{11}$- oder $C_{13}/C_{15}$-Oxoalkohols steht, x 2 bis 4,5 und y 2 bis 5 bedeutet, als schaumarme und biologisch abbaubare Tensidzusätze in Geschirrspülmitteln für Geschirrspülmaschinen.

**Claim**

The use of an alkoxylated alcohol of the formula

$$RO\left(CH_2-\underset{\displaystyle CH_3}{CH}-O\right)_x(CH_2-CH_2O)_y-H$$

where R is $C_{11}$-$C_{18}$-alkyl or the alkyl radical of a $C_9$-$C_{11}$ or $C_{13}$-$C_{15}$-oxo-alcohol, x is from 2 to 4.5 and y is from 2 to 5, as a low-foam biodegradable surfactant additive in dishwasher detergents.

**Revendication**

Utilisation d'alcools alcoxylés de la formule

$$RO\left(CH_2-\underset{\displaystyle CH_3}{CH}-O\right)_x(CH_2-CH_2O)_y-H$$

dans laquelle R désigne un groupe alcoyle en $C_{11}$ à $C_{18}$ ou le radical alcoyle d'un oxo-alcool en $C_9/C_{11}$ ou en $C_{13}/C_{15}$, x vaut 2 à 4,5 et y 2 à 5, comme additifs tensio-actifs peu moussants et biodégradables dans des compositions détergentes pour lave-vaisselle.